# FASCICULE DE BREVET EUROPEEN

(11) **EP 1 099 126 B1**
(45) Date de publication et mention de la délivrance du brevet: **02.11.2006**
(21) Numéro de dépôt: 00927348.3
(22) Date de dépôt: 17.05.2000
(51) Int. Cl.: G02B 1/11, G02B 5/28, C03C 17/34

(54) **SUBSTRAT TRANSPARENT A REVETEMENT ANTIREFLETS BAS-EMISSIF OU ANTI-SOLAIRE**
DURCHSICHTIGES SUBSTRAT MIT ANTIREFLEKTIONSBESCHICHTUNG NIEDRIGER EMISSIVITÄT ODER SONNENSCHUTZBESCHICHTUNG
TRANSPARENT SUBSTRATE WITH LOW-EMMISSIVITY ANTIGLARE OR INFRARED ABSORBING COATING

(30) Priorité: 20.05.1999 FR 9906407
(43) Date de publication de la demande: 16.05.2001
(73) Titulaire: SAINT-GOBAIN GLASS FRANCE, 92400 Courbevoie (FR)
(72) Inventeur: ANDERSON, Charles, F-92400 Courbevoie (FR); NADAUD, Nicolas, F-94250 Gentilly (FR)
(74) Mandataire: Renous Chan, Véronique
(86) Numéro de dépôt international: PCT/FR2000/001313
(87) Numéro de publication internationale: WO 2000/072053

(56) Documents cités:
- EP-A- 0 638 527
- US-A- 4 940 636
- US-A- 5 073 451
- US-A- 5 085 926
- US-A- 5 578 536

## Description

L'invention concerne les substrats transparents à base de polymère(s) organique(s) ou en verre, qui sont munis d'un revêtement antireflets, ainsi que leur mode de fabrication. Elle concerne également leur utilisation, notamment en tant que vitrages. Un revêtement antireflets est usuellement constitué d'un empilement de couches minces interférentielles, en général une alternance de couches à haut et bas indices de réfraction. Déposé sur un substrat transparent, un tel revêtement a pour fonction d'en diminuer sa réflexion lumineuse, donc d'en augmenter sa transmission lumineuse. Un substrat ainsi revêtu voit donc s'accroître son ratio lumière transmise/lumière réfléchie, ce qui améliore la visibilité des objets placés derrière lui.

On peut alors l'employer dans de nombreuses applications, par exemple pour protéger un tableau éclairé par une lumière placée derrière l'observateur, ou pour constituer ou faire partie d'une vitrine de magasin, afin de mieux distinguer ce qui se trouve dans la vitrine, même lorsque l'éclairage intérieur est faible par rapport à l'éclairage extérieur.

Les performances optiques d'un revêtement antireflets s'apprécient suivant différents critères. On considère qu'un revêtement antireflets est efficace s'il peut abaisser la réflexion lumineuse d'un substrat en verre clair standard jusqu'à une valeur donnée, par exemple 2%, voire 1% et moins.

La colorimétrie du vitrage ainsi obtenu est également importante : on cherche le plus souvent à ce que le revêtement ne modifie pas substantiellement l'aspect de couleur en réflexion du substrat nu, et, généralement à ce que cet aspect soit le plus neutre possible.

D'autres critères secondaires peuvent aussi être pris en compte suivant l'application envisagée, notamment la durabilité chimique et/ou mécanique du revêtement ou son éventuelle aptitude à subir sans détérioration des traitements thermiques. Un autre point important est la faisabilité d'une production industrielle d'un tel revêtement, qui dépend de la technique de dépôt utilisée, du coût et de la nature des matériaux constitutifs de l'empilement, du temps de cycle nécessaire à la production du revêtement, de la taille et de la forme du substrat, ....

L'optimisation, sur le plan optique au moins, des épaisseurs et des indices de réfraction des couches de revêtement antireflets a fait l'objet de nombreuses publications. En ce qui concerne les revêtements antireflets à quatre couches, qui offrent un bon compromis entre l'effet antireflets voulu du produit et son coût de fabrication, on peut par exemple citer le brevet US-3 432 225, décrivant des empilements du type (ZrO₂/MgF₂)₂, le brevet US-3 565 509 décrivant des empilements du type (CeO₂/MgF₂)₂ ou (CeO₂/SiO₂)₂ ou encore la publication « All-oxide broadband antireflection coating ... » de M. Buehler and al. du 15 août 1998 (vol. 27 - n° 16 - Applied Optics) décrivant des empilements (TiO₂/SiO₂)₂.

Ce dernier type d'empilement est intéressant, car il utilise comme matériau constitutif des couches à haut indice de l'oxyde de titane, qui a effectivement un indice de l'ordre de 2,45. Ce matériau présente l'avantage de pouvoir être déposé, de manière connue, par une technique de pulvérisation cathodique réactive assistée par champ magnétique, dans une atmosphère d'oxygène, à partir de cibles de titane disponibles commercialement à faible coût. Son utilisation n'est cependant pas dénuée d'inconvénients : si son incorporation dans un revêtement antireflets permet tout à fait d'atteindre des niveaux de réflexion très faibles, en revanche il n'est pas optimal en ce qui concerne la « stabilité » de l'aspect en réflexion du substrat revêtu. On entend par là deux choses : 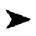 d'une part, la stabilité en fonction de l'angle d'incidence. En effet, il est préférable que les modifications d'intensité de réflexion et de teinte en réflexion soient les moins importantes possibles quand on passe d'un angle d'incidence normal au vitrage à un angle d'incidence plus rasant (ou plus généralement d'un angle d'incidence donné correspondant à l'angle d'incidence le plus probable avec lequel le vitrage va être vu par rapport à un angle d'incidence qui s'en éloignerait), ^{™} d'autre part, la stabilité en fonction des variations des épaisseurs des couches, à angle d'incidence fixe. Il est également important que l'aspect en réflexion reste quasiment inchangé, même si l'on doit admettre, selon les outils de production à disposition, une certaine tolérance sur les épaisseurs et/ou les indices des couches effectivement déposées.

L'invention a alors pour objet la mise au point d'un nouveau type de revêtement antireflets qui pallie ces inconvénients en étant plus performant optiquement, et notamment en conférant au substrat revêtu une plus grande " stabilité " de son aspect en réflexion dans l'acceptation du terme telle que décrite plus haut. Elle a notamment pour objet la mise au point d'un nouveau type de revêtement antireflets conciliant mieux les performances optiques et les exigences de faisabilité industrielle et économique pour ce type de produit.

L'invention a tout d'abord pour objet un substrat transparent comportant sur au moins une de ses faces un revêtement antireflets fait d'un empilement de couches minces, d'indices de réfraction alternativement forts et faibles, à base de matériau diélectrique. Dans cet empilement au moins une des couches minces à fort indice dudit revêtement antireflet comprend de l'oxyde de titane déposé par pulvérisation cathodique qui est modifié de façon à abaisser son indice de réfraction jusqu'à une valeur d'au plus 2,40, notamment jusqu'à une valeur d'au plus 2,38 et de préférence jusqu'à des valeurs comprises entre 2,25 et 2,38 à une longueur d'onde de 580 nm.

Modifier ainsi l'oxyde de titane s'est avéré très avantageux : en abaissant son indice, on s'est rendu compte qu'on améliorait, significativement la « stabilité » de l'aspect en réflexion du substrat revêtu telle qu'elle a été décrite plus haut. Or la stabilité vis-à-vis de l'angle d'incidence est de plus en plus requise pour toutes sortes d'applications, tout particulièrement, par exemple, quand il s'agit d'écrans de visualisation ou de parebrise de véhicules. Quand à la stabilité vis-à-vis des tolérances d'épaisseurs, elle permet, avec des outils de production standard, d'augmenter la productivité en diminuant le taux de rebut des substrats non conformes optiquement au cahier des charges. Garder l'oxyde de titane plutôt que de le remplacer par un tout autre matériau permet en outre de conserver l'avantage d'une technologie de dépôt bien connue pour ce type de matériaux. Pour obtenir cette modification, l'invention propose, de manière non limitative, quatre variantes de réalisation qui sont alternatives ou cumulatives.

La première variante consiste à modifier chimiquement l'oxyde de titane par incorporation d'azote. On obtient ainsi un oxynitrure de titane avec un taux de nitruration pouvant varier entre 1 et 20% atomique, que l'on peut ajuster pour obtenir l'abaissement d'indice de réfraction recherché. Cette nitruration peut être contrôlée en choisissant un mode de dépôt par pulvérisation cathodique, notamment assistée par champ magnétique, à partir de cibles en titane dans une atmosphère réactive contenant à la fois O₂ et N₂ dans des proportions définies de façon appropriée. On peut ainsi obtenir de l'oxyde de titane nitruré présentant un indice de réfraction d'environ 2,35 à 550 nm pour un ratio N₂/(N₂+O₂+Ar) d'environ 17% en volume dans la chambre de dépôt, (un ratio, mesuré en pourcentage volumique, N₂/O₂ dans la chambre de dépôt qui varie entre 0,2 et 1,8 permet d'ajuster l'indice de réfraction à des valeurs de l'ordre de 2,31 à 2,41). Un avantage subsidiaire de cette variante est que le TiOₓN_{y} a une vitesse de dépôt par pulvérisation cathodique réactive sensiblement supérieure à celle du TiOz. Le TiOₓN_{y} formé n'est quasiment pas absorbant, et présente une absorption lumineuse inférieure à 2%, contrairement au TiN.

La seconde variante consiste encore en une modification chimique de l'oxyde de titane, par incorporation d'au moins un métal « dopant » Me dont l'oxyde a un indice inférieur à celui de l'oxyde de titane, notamment un indice d'au plus 2,3 et de préférence compris entre 1,90 et 2,2. Le terme « dopant » n'a pas ici la signification qu'il peut avoir dans le domaine des semi-conducteurs. Il s'agit juste de souligner qu'il s'agit d'un métal minoritaire, et même largement minoritaire, par rapport au titane, avec lequel il forme un oxyde mixte.
Ce métal dopant Me est de préférence choisi parmi l'un au moins des métaux suivants : Ta, Zr, Sn, In, Zn ou Al.

Avantageusement , le pourcentage atomique du métal ou des métaux dopants Me par rapport au titane dans la couche ΣMe/Ti est d'au plus 40%, notamment d'au plus 35 ou 30% par angle compris entre 0,1 et 20% et de préférence entre 2 et 10% . En fait, le taux de Me dans l'oxyde de titane est modulé de façon à obtenir l'indice de réfraction final recherché, tout comme le taux de nitruration de la variante précédente. Si on choisit encore un mode de dépôt par pulvérisation cathodique, on peut par exemple utiliser un dépôt réactif en présence d'oxygène à partir de la cible de titane alliée avec le ou les métaux dopants Me dans des proportions appropriées (ces proportions étant voisines de celles que l'on retrouve dans la couche). Une autre possibilité consiste à utiliser une cible en titane pur recouvert partiellement du métal « dopant » sous forme métallique.

On peut noter que dans cette variante, la présence du métal dopant dans l'oxyde de titane peut non seulement affecter son indice de réfraction mais aussi lui conférer une fonctionnalité supplémentaire. Ainsi, la présence de cérium peut conférer à la couche, et donc au revêtement dans son ensemble, des propriétés de filtration des rayons ultraviolets. Tout comme dans le cas d'une nitruration, un tel « dopage » de l'oxyde de titane permet également d'augmenter la vitesse de dépôt de la couche quand on choisit un mode de dépôt par pulvérisation cathodique. Plus le métal « dopant » présente un rendement de pulvérisation élevé et plus le gain en vitesse de dépôt est notable. Par ordre d'augmentation croissante de vitesse de dépôt, on peut citer Zr, puis Ta, puis Zn puis Sn.

La troisième variante consiste à modifier l'oxyde de titane physiquement, dans sa structure, notamment par abaissement de sa densité, augmentation de sa porosité. On peut ajuster les paramètres de dépôt de la couche, notamment par exemple la pression à laquelle on effectue le dépôt par pulvérisation cathodique réactive de l'oxyde de titane, pour obtenir une couche dont la densité n'est, par exemple, que de 80 à 95% de sa densité théorique, celle qui correspond à l'indice standard de l'oxyde de titane, à savoir environ 2,45. Cette solution est techniquement avantageuse puisqu'elle permet d'utiliser des cibles de titane standard.

La quatrième variante consiste à intégrer la couche d'oxyde de titane dans un multicouche à haut indice, associant à la couche d'oxyde de titane au moins une autre couche d'indice élevé mais cependant d'au plus 2,3, de façon à abaisser l'indice de réfraction « global » ou « moyen » dudit multicouche. Dans ce cas de figure, on peut donc continuer d'utiliser des couches de TiO₂ standard d'indice supérieur à 2,35, mais en transformant la couche à haut indice en une superposition de couches de matériaux différents. On obtient donc un multicouche à haut indice, dont l'indice global est inférieur à celui du TiO₂ standard et qui peut se calculer en faisant le rapport de la somme des épaisseurs optiques de toutes les couches faisant partie du multicouche sur la somme de leurs épaisseurs physiques. Pour atteindre l'indice de réfraction « global » voulu, on a ici la possibilité à la fois de sélectionner l'épaisseur physique de chacune des couches, et l'indice de chacune d'elles, mis à part celle à base de TiO₂. Pour que cette multicouche à haut indice ait un rôle optique équivalent à celui remplit par la monocouche usuelle, on confère à celle-ci de préférence une épaisseur optique globale identique. Cela signifie que l'on est conduit à utiliser dans ces multicouches des couches de TiO₂ plus minces que les épaisseurs requises quand elles sont utilisées en monocouche. C'est un point avantageux sur le plan industriel, car l'oxyde de titane tend à avoir des vitesses de dépôt peu élevées par pulvérisation cathodique.

Notamment dans le cas de la seconde et de la quatrième variante, il a en outre été observé que les empilements étaient bombables/trempables, pouvant subir des traitements thermiques à plus de 500°C sans dommages sensibles optiquement. Cela serait dû à une plus faible cristallisation du TiO₂ ainsi modifié sous l'effet de la chaleur.

La ou les autres couches du multicouche ont de préférence un indice de réfraction compris entre 1,9 et 2,2. Elles sont notamment choisies à base d'oxyde(s) métallique(s) du type oxyde de tantale Ta₂O₅, de zirconium ZrO₂, d'étain SnO₂, d'indium In₂O₃, de zinc ZnO ou à base de nitrure de silicium Si₃N₄ ou d'aluminium AIN.

On a vu que le choix de l'un ou l'autre de ces matériaux pouvait être dicté par leur nature et/ou par leur vitesse de dépôt par pulvérisation cathodique, supérieure à celle de TiO₂. En outre, tout comme dans le cas de la seconde variante, cette ou ces couches supplémentaires peuvent conférer une fonctionnalité supplémentaire à l'empilement.

Toujours dans le contexte de cette quatrième variante, une configuration particulière s'est révélée propice à une stabilité de l'aspect en réflexion : il s'agit de la configuration où le multicouche comprend deux couches contiguës dont celle comprenant de l'oxyde de titane, ces deux couches présentant une différence d'indices de réfraction Δi négative en partant du substrat. Cela signifie que si l'une des couches est la n^{ième} en comptant à partir du substrat et que la suivante est la (n+1)^{ème} , la différence d'indices Δi égale à l'indice de n^{ième} couche moins l'indice de la (n+1)^{ème} couche est négative, donc, plus simplement que c'est la couche qui a l'indice le plus élevé (en l'occurrence celle en TiO₂) qui est la plus éloignée du substrat.

De même, une configuration préférée, qui peut être cumulée à la configuration ci-dessus, consiste en ce que, en valeurs absolues, ces deux couches contiguës présentent une différence d'indices Δi compris entre 0,1 et 0,6, notamment entre 0,4 et 0,5 et de préférence supérieure à 0,4. Il sera en effet d'autant plus facile d'abaisser l'indice global de la multicouche que l'on choisit un matériau à associer au TiO₂ dont l'indice se démarque sensiblement de celui du TiO₂.

Selon l'invention, les couches à faible indice du revêtement antireflets ont un indice de réfraction compris entre 1,30 et 1,65. Avantageusement, il peut s'agir d'oxyde de silicium SiO₂, d'oxyde d'aluminium Al₂O₃, d'oxyfluorure d'aluminium AlOₓF_{y} ou de fluorure d'aluminium AlF, de fluorure de magnésium MgF₂ ou de leurs mélanges, et éventuellement halogénés en ce qui concerne les oxydes (fluorés).

On peut ainsi prévoir qu'au moins une des couches à bas indice de l'empilement antireflets soit à base d'un mélange d'oxyde de silicium et d'aluminium, (éventuellement fluoré), notamment la dernière couche de l'empilement : une telle couche d'oxyde « mixte » présente en effet une durabilité, notamment chimique, meilleure qu'une couche de SiO₂ pure. On sélectionne le taux optimal d'aluminium dans la couche pour obtenir cette meilleure durabilité, sans cependant trop augmenter l'indice de réfraction de la couche par rapport à de la silice pure, pour ne pas affecter les propriétés optiques de l'antireflets, l'oxyde d'aluminium ayant en effet un indice d'environ 1,60 à 1,65, supérieur à celui de SiO₂ qui est d'environ 1,45. Le pourcentage atomique préféré de Al par rapport à Si est de par exemple 5 à 20%, notamment d'environ 8 à 12%, notamment d'environ 10%. Il n'est pas exclu que l'une des couches au moins, dite à bas indice, dans l'empilement soit en fait un « multicouche » à bas indice, de manière similaire à la « multicouche » à haut indice de la quatrième variante exposée plus haut.

Selon l'invention, le revêtement antireflets peut être sous forme d'un empilement de type (couche à fort indice/couche à faible indice)n, avec n=2 ou 3.

Le cas où n est égal à 2 correspond ainsi à un revêtement antireflets à quatre couches. Avantageusement, leurs épaisseurs optiques sont (les couches étant comptées à partir du substrat) :
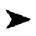 pour la première couche, à fort indice : environ λ/15 avec λ =580 nm, donc environ 18 à 22 nm, (avec par exemple un indice de réfraction d'environ 2,00).
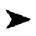 pour la seconde couche, à faible indice : environ λ/11 avec λ = 580 nm, donc environ 32 à 38 nm, (avec par exemple un indice de réfraction d'environ 1,48).
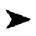 pour la troisième couche, à fort indice : environ λ/2 avec λ = 580 nm, donc environ 105 à 125 nm, (avec par exemple un indice de réfraction de 2,45).
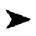 pour la quatrième couche, à faible indice : environ λ/4 avec λ = 580 nm, donc environ 80 à 90 nm, (avec par exemple un indice de réfraction de 1,48).
(Il est bien entendu qu'ici et dans toute la suite du texte, « couche » peut signifier « multicouche » et que dans ce dernier cas, son épaisseur optique est la somme des épaisseurs optiques de couches qui la composent).

Une autre possibilité consiste à remplacer dans l'empilement décrit ci-dessus une des séquences (couche à haut indice / couche à bas indice) par une unique couche à indice « intermédiaire », indice par exemple compris entre 1,65 et 1,85, de préférence d'environ 1,75 à 1,80. De préférence, c'est la première séquence à compter du substrat qui peut ainsi être remplacée, l'épaisseur optique de la couche à indice intermédiaire pouvant être d'environ 80 à 120 nm.

Une telle couche à indice intermédiaire a un effet optique très similaire à celui d'une séquence couche haut indice / couche bas indice, et présente l'avantage de diminuer le nombre global de couches de l'empilement. Elle est avantageusement à base d'un mélange d'oxyde de silicium et d'étain, de silicium et de zinc, de silicium et de titane, ou encore à base d'oxynitrure de silicium ou d'aluminium. La proportion relative entre les différents constituants de ces matériaux permet d'ajuster l'indice de réfraction de la couche.

On peut utiliser une technique de pulvérisation cathodique réactive utilisant respectivement, une cible à base de l'alliage voulu en présence d'oxygène et éventuellement d'azote dans le cas d'une couche d'oxyde mixte, une cible de silicium ou d'aluminium en présence d'un mélange O₂/N₂ dans des proportions appropriées dans le cas de couches SiOₓN_{y} ou AlOₓN_{y}. En adaptant les conditions de dépôt, on peut en effet faire varier l'indice de couches de SiOₓN_{y} dans une gamme allant de 1,46 à 2,1 et l'indice des couches de AlOₓN_{y} dans une gamme allant de 1,65 à 2,1.

Il existe aussi des oxydes simples compatibles avec la gamme d'indice recherchée, et que l'on peut déposer par pulvérisation cathodique réactive, comme certains oxydes de terre rare (La₂O₃) ou apparentés (Y₂O₃), mais le coût des cibles est élevé.

En ce qui concerne des couches à haut indice, mis à part celles à base de TiO₂ modifié selon l'invention, qui peuvent faire partie du revêtement, elles ont de préférence un indice d'au moins 1,9 à 2,0 et notamment compris entre 1,9 et 2,2. Il peut s'agir des oxydes cités du type ZnO, Ta₂O₅, SnO₂, Nb₂O₅, ZrO₂. Il peut aussi s'agir de nitrure de silicium ou d'aluminium. Ces derniers matériaux à base de nitrure ont un atout supplémentaire : ils permettent de faire barrière efficacement à la migration d'espèces du type alcalins susceptibles de migrer du verre, quand le substrat est de type verrier, et ils sont également une barrière efficace vis-à-vis de l'oxydation : utilisés dans une configuration appropriée, ces matériaux faisant partie intégrante du revêtement peuvent aussi lui conférer une capacité à résister sans détérioration à des traitements thermiques, notamment du type recuit, trempe, bombage quand le substrat porteur est en verre. Sinon, il est possible de déposer le revêtement sur le substrat verrier une fois que celui-ci a subi son traitement thermique, une fois recuit, trempé et/ou bombé.

A noter cependant que l'invention s'applique également aux substrats dits plastiques à base de polymère(s) organique(s) comme les substrats rigides à base de polycarbonate tel que le polyméthacrylate de méthyle PMMA. Il peut aussi s'agir de substrats plastiques « souples », que l'on vient ensuite appliquer, une fois fonctionnalisés sur une face par le revêtement antireflets, à un substrat rigide du type verre par exemple.

Par ailleurs, on peut noter que l'oxyde de titane modifié de différentes façons conformément à l'invention peut également être utilisé avantageusement dans des revêtements multicouches autres que des revêtements antireflets. Il peut tout particulièrement être incorporé comme couche de diélectrique dans des empilements de couches de type bas-émissive, ou anti-solaire, utilisant une ou plusieurs couches fonctionnelles en métal du type Ag ou en nitrure de métal du type TiN, ZrN, NbN associés à des couches en matériau diélectrique. Ces types d'empilement sont par exemple décrits dans les brevets EP - 718 250, EP - 638 528, EP - 638 527, EP - 650 938 et, en ce qui concerne les empilements bas-émissifs, commercialisés sous la dénomination « Planitherm » par Saint-Gobain Vitrage. Les couches fonctionnelles peuvent aussi être en Ni, en NiCr, en acier inox ou en inconel.

De préférence, chacune des faces du substrat à traiter comporte un revêtement antireflets selon l'invention, pour obtenir l'effet antireflets maximal. On a vu que les matériaux impliqués dans le revêtement antireflets sont généralement des matériaux diélectriques. Il est cependant possible qu'ils soient au moins légèrement conducteurs, par exemple en dopant de manière connue un oxyde métallique de l'empilement, ce qui permet de conférer éventuellement à l'ensemble du revêtement une fonctionnalité anti-statique supplémentaire (par exemple SnO₂ dopé avec du fluor ou de l'antimoine, ZnO dopé avec Al.

L'invention a aussi pour objet les vitrages incorporant les substrats revêtus, qu'ils soient monolithiques, feuilletés, ou multiples à lame(s) de gaz intercalaire(s). Ces vitrages peuvent être utilisés aussi bien en tant que vitrages intérieurs ou extérieurs de bâtiment qu'en tant que verre de protection d'objet du type tableau, vitrine, mobilier verrier comme un comptoir ou une vitrine réfrigérée, qu'en tant que vitrages automobiles du type parebrise feuilleté, miroirs, écrans anti-éblouissement pour ordinateurs, verre décoratif, tout type d'écrans de visualisation.

Le vitrage incorporant le substrat à revêtement antireflets selon l'invention peut présenter des propriétés additionnelles intéressantes. Ainsi, il peut s'agir d'un vitrage à fonction de sécurité, comme des vitrages feuilletés commercialisés par Saint-Gobain Vitrage, sous le nom de Stadip, ou de vitrages trempés comme les glaces trempées commercialisées par Saint-Gobain Vitrage sous le nom de Sekurit. Il peut aussi s'agir de vitrages anti-effraction, comme ceux commercialisés par Saint-Gobain Vitrage sou le nom de Contrasonor (doubles vitrages) ou Phonip (vitrages feuilletés), ou encore de protection vis-à-vis du feu (pare-flamme ou coupe-feu).

Le vitrage peut aussi être choisi tel que sur le substrat déjà muni de l'empilement antireflets ou sur l'une des faces des autres substrats constitutifs du vitrage, est déposée une couche (ou un empilement de couches) à fonction spécifique, par exemple anti-solaire ou absorbant thermiquement, comme des couches en nitrure de titane (comme décrites dans les brevets précités), ou encore des couches telles que celles commercialisées sous le nom de Cool-lite ou Antélio ou Cool-lite K par Saint-Gobain Vitrage, ou encore à fonction anti-ultraviolets, anti-statique (du type couche d'oxyde métallique dopé légèrement conductrice), bas-émissive, comme les couches à base d'argent du type Planitherm (décrites par exemple dans les brevets précités), ou d'oxyde d'étain dopé du type EKO commercialisées par Saint-Gobain Vitrage. Dans le cas d'une couche à fonction anti-statique, il est préférable que celle-ci soit disposée sur la face du substrat muni de l'empilement antireflets. La couche peut aussi être prévue chauffante (du type couche de métal avec amenées de courant adéquates), ce qui peut être intéressant notamment pour les vitrines réfrigérées, pour éviter le dépôt de buée à leur surface. Il peut aussi s'agir de couche à propriétés anti-salissures comme une très fine couche de TiO₂ (décrite par exemple dans les brevets WO - 97/10186 ET WO - 97/10185) ou encore une couche organique hydrophobe à fonction anti-pluie ou hydrophile à fonction anti-buée. Comme exemple de couche hydrophobe, on pourra se reporter à la couche à base d'organo-silane fluoré décrite dans les brevets US-5 368 892 et US-5 389 427. Ces couches peuvent être déposées sur le revêtement antireflets ou directement sur le substrat si son autre face n'est pas traitée par un revêtement antireflets.

Il peut aussi s'agir d'une couche d'argenture à fonction miroir. Toutes les configurations sont possibles. Ainsi, dans le cas d'un vitrage monolithique à fonction miroir, on a intérêt à déposer le revêtement antireflets en face 1 (c'est-à-dire du côté où se trouve le spectateur) et la couche d'argenture en face 2 (c'est-à-dire du côté où le miroir est accroché à une paroi), l'empilement antireflets de l'invention évitant ainsi le dédoublement de l'image réfléchie.

Dans le cas d'un double-vitrage, (où l'on numérote conventionnellement les faces des substrats verriers en commençant par la face la plus extérieure), on peut ainsi disposer l'empilement antireflets usuellement en face 1, et les autres couches fonctionnelles en face 2 pour un anti-ultraviolets ou un anti-solaire, 3 pour une couche bas-émissive. Dans un double-vitrage, on peut ainsi avoir au moins un empilement antireflets sur l'une des faces des substrats et au moins une autre couche ou un autre empilement de couches apportant une fonctionnalité supplémentaire. Le double-vitrage peut aussi comporter plusieurs revêtements antireflets, notamment au moins en face 2 ou 3.

Pour un vitrage monolithique, on peut prévoir de déposer une couche à fonction anti-statique, associée à un second empilement antireflets.

De même, le verre choisi pour le substrat revêtu de l'empilement selon l'invention ou pour les autres substrats qui lui sont associés pour former un vitrage, peut être particulier, par exemple extra-clair, du type de celui commercialisé par Saint-gobain Vitrage sous l'appellation *Diamant,* ou clair du type Planilux ou teinté du type Parsol, deux produits commercialisés par Saint-Gobain Vitrage. Il peut être lui-même filtrant vis-à-vis du rayonnement du type ultraviolet. Le ou les substrats peuvent avoir subi des traitements thermiques, une trempe, un bombage ou même un pliage, c'est-à-dire un bombage avec un très petit rayon de courbure (application pour les vitrines-comptoirs des magasins en particulier). On a pu vérifier que le revêtement antireflet déposé sur un verre extra-clair conférait au vitrage une visibilité de transmission extraordinaire.

Le substrat peut aussi avoir subi un traitement superficiel, notamment un dépolissage, l'empilement antireflets pouvant être déposé sur la face dépolie ou sur la face opposée.

Le substrat, où l'un de ceux avec lequel il est associé, peut être aussi du type verre décoratif, imprimé, ou sérigraphié.

Un vitrage particulièrement intéressant incorporant le substrat à revêtement antireflets selon l'invention est le suivant : il s'agit d'un vitrage comportant une structure feuilletée avec deux substrats verriers associés par une feuille de polymère d'assemblage du type polyvinylbutyral. Au moins un des substrats et de préférence les deux, est muni du revêtement antireflets selon l'invention, de préférence en face extérieure, notamment selon la séquence : revêtement antireflets/verre/PVB/verre/revêtement antireflets

Cette configuration, notamment avec les deux substrats bombés et/ou trempés, permet l'obtention d'un vitrage automobile, et notamment d'un parebrise, très avantageux : en effet, les normes imposent dans les automobiles des parebrises à haute transmission lumineuse, d'au moins 75% en incidence normale. Grâce à l'incorporation de revêtements antireflets dans une structure feuilletée de parebrise usuelle, la transmission lumineuse du vitrage s'en trouve augmentée, ce qui permet d'abaisser légèrement sa transmission énergétique tout en étant encore aux normes en terme de transmission lumineuse. On peut ainsi augmenter l'effet anti-solaire du parebrise, par exemple par absorption des substrats en verre. Concrètement, on peut ainsi faire passer la valeur de réflexion lumineuse d'un parebrise feuilleté standard de 8 à moins de 1%, tout en baissant sa transmission énergétique de 1 à 10% par exemple en la faisant passer de 85 à 81%. On peut ainsi utiliser des verres plus teintés, donc plus anti-solaires, tout en compensant la chute en transmission lumineuse induite grâce au revêtement antireflets.

L'invention a également pour objet le procédé de fabrication des substrats verriers à revêtement antireflets. Un procédé consiste à déposer l'ensemble des couches, par une technique sous vide, notamment par pulvérisation cathodique assistée par champ magnétique. Ainsi, on peut déposer les couches d'oxyde par pulvérisation réactive du métal en question en présence d'oxygène, les couches de nitrure en présence d'azote, les couches d'oxynitrure en présence d'azote et d'oxygène.

Un autre choix peut consister à déposer tout ou partie des couches de l'empilement, notamment la ou les premières couches, par une technique de pyrolyse de précurseurs adaptés.

Quel que soit le mode de réalisation choisi, l'invention permet la fabrication de substrats qui, une fois fonctionnalisés avec les empilements antireflets décrits plus haut, présentent une réflexion lumineuse R_{L} d'au plus 2 et même d'au plus 1% à incidence normale (bien sûr, en modifiant de manière appropriée les épaisseurs optiques de couches de l'empilement, on peut aussi choisir de minimiser la réflexion lumineuse à un angle d'incidence non normal, ce qui est par exemple intéressant dans le cas d'une application à un parebrise qui se trouve incliné par rapport à la verticale d'environ 65°.

De même, leur colorimétrie en réflexion est particulièrement stable comparée à des revêtements antireflets connus, notamment ceux utilisant du TiO₂ standard comme matériau à haut indice. Ainsi, même quand la minimisation de la réflexion lumineuse est optimisée à l'incidence normale, la valeur de réflexion et la teinte en réflexion sont peu modifiées même quand le substrat est observé à des angles d'incidence différents sensiblement de la normale.
Tout particulièrement, les signes de a* et b* dans le système de colorimétrie (L*, a*, b*) restent inchangés même à incidence défavorable, notamment rasante. Le maintien des signes de « a* et b* » traduit qu'il n'y a pas de « basculement » d'une teinte à une autre, notamment d'une teinte favorable dans les bleus ou bleu-vert (a* et b* tous les deux négatifs) vers une teinte moins favorable (où a* et/ou b* deviendraient positifs, correspondant à des teintes jaunes, violettes ou rouges). On limite également toute augmentation de la saturation C*, caractéristique rendant compte de l'intensité de la couleur ( c* = (a*² + b*²)^{1/2})

Les revêtements antireflets de l'invention autorisent en outre des tolérances sur les épaisseurs des couches qui les constituent, de l'ordre de par exemple ± 2%, sans modification notable de son aspect en réflexion, avec là encore une conservation des signes de a* et b* (avec, pour donner des ordres de grandeur, des différences dans des valeurs de a* et b* notées Δaₖ et Δb* d'au plus 2 en valeurs absolues).

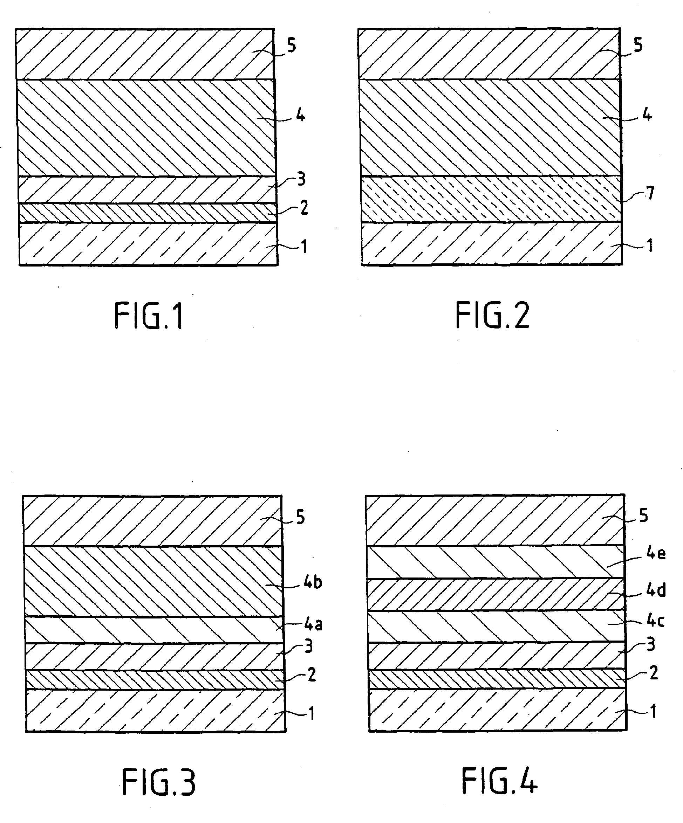

Les détails et caractéristiques avantageuses de l'invention vont maintenant ressortir des exemples suivants non limitatifs, à l'aide des figures 1 à 4.

Les figures 1 à 4 très schématiques représentent en coupe un substrat surmonté d'un empilement antireflets selon l'invention (les proportions entre l'épaisseur du substrat et celles des couches n'ont pas été respectées pour en faciliter la lecture). En fait, chacune des faces du substrat est munie d'un empilement identique, mais un seul empilement a été représenté pour plus de clarté. L'utilisation d'un revêtement sur chacune des faces du substrat a été effectué sur l'ensemble des exemples qui suivent, concernant plutôt des vitrages destinés à équiper de bâtiments.

On précise que dans ces exemples, les dépôts successifs de couches minces se font par pulvérisation cathodique réactive assistée par champ magnétique, mais pourraient être réalisés par toute autre technique sous vide ou du type pyrolyse permettant une bonne maîtrise des épaisseurs de couches obtenues.

Les substrats sur lesquels sont déposés les revêtements antireflets sont des substrats de verre silico-sodo-calcique clair du type Planilux de 4 mm d'épaisseur.

### EXEMPLE 1

Cet exemple est conforme à la figure 1 : il comporte un verre 1 surmonté de l'empilement antireflets selon l'invention 6 qui est composé de deux couches minces à haut indice 2, 4 et de deux couches minces à bas indice 3, 5.
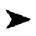 la couche 3 à bas indice est en SiO₂
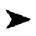 la couche 5 à bas indice est un mélange d'oxydes de silicium et d'aluminium SiAlₓO_{y} (environ 10% atomique d'Al par rapport à Si).
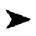 la couche 2 à haut indice est en SnO₂
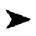 la couche 4 à haut indice est un oxyde de titane modifié par nitruration partielle selon l'invention, matériau répondant à la formule TiOₓN_{y}, le taux de nitruration étant ajusté pour atteindre un indice de réfraction d'environ 2,35 à 580 nm soit un ratio en % volumique N₂/(N₂+O₂+Ar) d'azote d'environ 15 à 20% dans la chambre de dépôt.

Le tableau 1 ci-dessous regroupe l'indice, l'épaisseur physique et optique des couches de l'empilement :

**TABLEAU 1**

| Verre | (1) | Indice | Ep. Physique (nm) | Ep. Optique (nm) |
|---|---|---|---|---|
| SnO₂ | (2) | ≈ 2 | 19,2 | 38 |
| SiO₂ | (3) | ≈ 1,45 | 37,2 | 54 |
| TiOₓN_{y} | (4) | ≈ 2,35 | 118,5 | 278 |
| SiAlₓO_{y} | (5) | ≈ 1.48 | 85 | 126 |

### EXEMPLE 2

Cet exemple reprend l'empilement de l'exemple 1 en substituant aux couches 2 et 3 comme représenté à la figure 2, une unique couche d'indice intermédiaire 7 en oxynitrure de silicium SiOₓN_{y}, dont on module le taux d'azote pour ajuster l'indice à une valeur d'environ 1,78.

Le tableau 2 reprend pour cet exemple de revêtement à trois couches les données mentionnées au tableau précédent.

**TABLEAU 2**

| Verre | (1) | Indice | Ep. Physique (nm) | Ep. Optique (nm) |
|---|---|---|---|---|
| SiOₓN_{y} | (7) | 1, 78 | 60 | 107 |
| TiOₓN_{y} | (4) | ≈ 2,35 | 118,5 | 278 |
| SiAlₓO_{y} | (5) | ≈ 1,48 | 85 | 126 |

### EXEMPLE 3

Cet exemple reprend la configuration d'empilement à trois couches de l'exemple 2, en utilisant un autre type de couche d'oxyde de titane modifié : à la place de la couche 4 en TiOxNy, on utilise ici une couche 4 d'oxyde de titane contenant du tantale dans dans une proportion en % atomique Ta/Ti dans la couche d'environ 10 à 15%, notamment de 13% (on utilise une cible d'alliage Ti-Ta en proportions appropriées), de façon à ce que l'indice de la couche soit d'environ 2,33 à 2,40, notamment de 2,35 (les épaisseurs optiques sont les mêmes qu'à l'exemple 2).

On a donc l'empilement suivant :

| | | | |
|---|---|---|---|
| Verre / SiOₓN_{y} / Ti-TaₓO_{y} / SiAlₓO_{y} (1) (7) (4) (5) | | | |

On a vérifié que l'oxyde de titane modifié au tantale permettait d'atteindre des vitesses de dépôt 40% supérieures à celles du TiO₂.

### EXEMPLE 4

Cet exemple est identique à l'exemple 3, mais ici l'oxyde de titane est modifié non par du tantale mais par du zirconium : on a ici une couche 4 de formule TiZrₓO_{y}, visant à atteindre un indice de réfraction de l'ordre de 2,24 à 2,39, notamment de 2,30, pour un % atomique de Zr dans la couche d'environ 25 à 30%, notamment de 27%. On a vérifié que l'oxyde de titane ainsi modifié au zirconium présente une vitesse de dépôt 20% supérieure à celle du TiO₂.

### EXEMPLE 5

Cet exemple est illustré à la figure 3 : il s'agit ici d'un empilement à cinq couches où les couches 2, 3 et 5 sont de même type que celles de l'exemple 1. La différence d'avec cet exemple réside dans le fait que la couche 4 à haut indice est ici remplacée par un bi-couche comprenant la séquence SnO₂/TiO₂ : il s'agit ici de la variante selon l'invention où l'on modifie l'indice de la couche d'oxyde de titane (4b) en l'associant à une couche (4a) d'un matériau rentrant toujours dans la définition d'une couche haut indice (au moins 1,9) mais d'un indice cependant inférieur à celui du TiO₂ standard. On confère au bi-couche (4a + 4b) une épaisseur optique proche de celle de la couche 4 de l'exemple 1.

Le tableau 3 ci-dessous regroupe les donnes concernant cet empilement.

**TABLEAU 3**

| Verre | (1) | Indice | Ep. Physique (nm) | Ep. Optique (nm) |
|---|---|---|---|---|
| SnO₂ | (2) | ≈ 2 | 12,5 | 25 |
| SiO₂ | (3) | ≈ 1,45 | 29,2 | 42 |
| SnO₂ | (4a) | ≈ 2 | 29,6 | 59 |
| TiO₂ | (4b) | ≈ 2,45 | 94,4 | 231 |
| SiAlₓO_{y} | (5) | ≈ 1,48 | 80,6 | 119 |

### EXEMPLE 6

Cet exemple reprend les données de l'exemple 5 mais en remplaçant le bi-couche 4a-4b par un tri-couche 4c-4d-4e selon la figure 4.

Ce tri-couche est composé de la séquence : 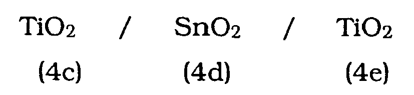 Ici, on a donc deux couches de TiO₂ « standard » encadrant une couche de SnO₂ d'indice moindre. Là encore, on confère approximativement au tri-couche 4c-4d-4e une épaisseur optique globale voisine de celle du bi-couche de l'exemple 5 ou du monocouche de l'exemple 1, (en fait approximativement une valeur de l'ordre de λ/2 avec λ = 580 nm).

Le tableau 4 ci-dessous regroupe les données concernant cet empilement.

**TABLEAU 4**

| Verre | (1) | Indice | Ep. Physique (nm) | Ep. Optique (nm) |
|---|---|---|---|---|
| SnO₂ | (2) | 2 | 18,5 | 27 |
| SiO₂ | (3) | ≈ 1,45 | 33,8 | 49 |
| TiO₂ | (4c) | ≈ 2,45 | 33,9 | 83 |
| SnO₂ | (4d) | ≈ 2,00 | 32,9 | 66 |
| TiO₂ | (4e) | ≈ 2,45 | 32,9 | 81 |
| SiAlₓO_{y} | (5) | ≈ 1,48 | 87 | 129 |

Il est à noter que dans tous les exemples précédents, on peut substituer aux couches 5 de SiAlₓO_{y} des couches simplement en SiO₂, la présence d'aluminium permettant essentiellement d'augmenter la durabilité de la couche et, de fait, de l'empilement dans son ensemble.

De même, la substitution de la première séquence de couches par une couche intermédiaire comme cela a été réalisé à l'exemple 3 peut être également réalisée dans les autres exemples.

Les épaisseurs optiques ont été choisies pour minimiser la réflexion à incidence normale.

A titre de comparaison, on a également réalisé un exemple comparatif 5 bis remplaçant le bi-couche SnO₂/TiO₂ par une monocouche en TiO₂ standard (indice 2,45) d'épaisseur optique équivalente à celle de la bi-couche (épaisseur optique : 262 nm ; épaisseur physique : 107 nm).

Cet exemple est donc de type :
Verre/SnO₂/SiO₂/TiO₂ standard/SiAlₓO_{y}

On a alors mesuré les valeurs de R_{L} (en %) et de a* et b* dans le système de colorimétrie (L*, a*, b*) des substrats revêtus selon l'exemple 5 et l'exemple 5bis à différents angles d'incidence α (α = 0 correspond à une incidence normale).

Les résultats sont exposés dans le tableau 5 ci-dessous :

**TABLEAU 5**

| | EXEMPLE 5BIS | EXEMPLE 5 |
|---|---|---|
| α = 0 | | |
| R_{L} | 0,80 | 0,80 |
| a* | -3,00 | -3,00 |
| b* | -3,00 | -3,00 |
| α = 20° | | |
| R_{L} | 1,04 | 1,01 |
| a* | -4,46 | -4,23 |
| b* | -2,01 | -1,45 |
| α = 40° | | |
| R_{L} | 2,52 | 2,45 |
| a* | -3,20 | -2,70 |
| b* | -3,30 | -1,00 |
| α = 60° | | |
| R_{L} | 10,75 | 10,95 |
| a* | +0,47 | -0,61 |
| b* | -4,09 | 0,45 |
| α = 70° | | |
| R_{L} | 24,54 25,04 | |
| a* | +1,26 | -0,23 |
| b* | -2,76 | -0,43 |

Ce que l'on peut déduire de ce tableau est que l'exemple 5 est plus favorable sur le plan colorimétrique que l'exemple 5bis à deux niveaux :
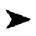 d'une part, même à angle d'incidence très défavorable (α = 60 ou 70°), l'exemple selon l'invention garde des valeurs a* et b* inchangées et toutes les deux négatives : on garde un aspect bleuté. Au contraire, on voit que pour l'exemple comparatif, a* devient positif, ce qui signifie qu'on bascule vers une autre teinte,
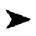 d'autre part, il y a une tendance générale, dès que l'on s'écarte de l'incidence normale, à ce que l'exemple selon l'invention, présente, en valeurs absolues, des valeurs de a* et b* qui diminuent (la saturation c* diminue) : on tend donc à se rapprocher de la neutralité en réflexion quand α augmente, ce qui est favorable car, en parallèle, et cela paraît inévitable, la valeur de R_{L} tend, elle, à augmenter : le niveau de réflexion global augmentant se trouvant ainsi moins pénalisant, « compensé » en quelque sorte par le gain en neutralité de couleur.

### EXEMPLE 7

Cet exemple reprend les données de l'exemple 5, mais en inversant l'ordre des couches 4a et 4b.

On a ainsi l'empilement :
Verre⁽¹⁾/SnO₂⁽²⁾/SiO₂⁽³⁾/TiO₂^{(4b)}/SnO₂^{(4a)}/SiAlOₓ⁽⁵⁾
en gardant pour chacune des couches considérées les épaisseurs des couches de même nature de l'exemple 5.

### EXEMPLE 8

Cet exemple reprend les données de l'exemple 7, en substituant aux deux couches 2 et 4a en SnO₂ des couches en Si₃N₄ (de même épaisseur, les indices de réfraction de ces deux matériaux étant sensiblement identiques, autour de 2).

On a ainsi l'empilement :
Verre⁽¹⁾/Si₃N₄⁽²⁾/SiO₂⁽³⁾/TiO₂^{(4b)}/Si₃N₄^{(4a)}/SiAlOₓ⁽⁵⁾

### EXEMPLE 9

Cet exemple reprend les données de l'exemple 7, en substituant à la couche 4a de SnO₂ une couche de nitrure de silicium.

On a ainsi l'empilement :
Verre⁽¹⁾/SnO₂⁽²⁾/SiO₂⁽³⁾/TiO₂^{(4b)}/Si₃N₄^{(4a)}/SiAlOₓ⁽⁵⁾

L'exemple 7 donne de bons résultats sur le plan optique : il permet de confirmer que, dans la variante de l'invention où l'on associe au TiO₂ une couche d'un matériau d'indice inférieur, on peut choisir de disposer le TiO₂ au-dessus ou au-dessous de ladite couche.

Les exemples 8 et 9 utilisent du Si₃N₄ : ce matériau permet de conférer une meilleure durabilité, notamment mécanique, à l'ensemble de l'empilement. Pour obtenir cette amélioration de façon la plus optimale, c'est la couche qui se trouve juste sous la dernière couche à bas indice qui doit être en Si₃N₄, comme c'est le cas de l'exemple 9. Une seconde couche de Si₃N₄, comme à l'exemple 8, renforce encore cette amélioration de durabilité.

Les exemples 5, 7, 8 et 9, notamment, sont des substrats revêtus bombables/trempables : les verres peuvent, après dépôt des couches, subir un traitement thermique de l'ordre de 500 à 550°C sans altération optique significative. Une explication de cette propriété remarquable serait qu'associer à la couche de TiO₂ une autre couche permet d'utiliser du TiO₂ dans des épaisseurs moins importantes. Des couches de TiO₂ plus fines auraient moins la capacité à se cristalliser, à se modifier optiquement sous l'effet de la chaleur que des couches de TiO₂ dépassant une certaine épaisseur, 100 nm par exemple.

Cette absence de cristallisation ou cette faible cristallisation sous l'effet de la chaleur s'observe également quand on modifie chimiquement le TiO₂, dans la variante de l'invention où l'on incorpore dans le TiO₂ un « dopant » métallique.

En conclusion, les revêtements antireflets selon l'invention sont performants sur le plan optique. Ils sont, dans au moins une partie des variantes de l'invention, en outre extrêmement durables sur le plan mécanique et bombables/trempables. Ils peuvent être destinés à équiper des bâtiments, à protéger des tableaux. Ils peuvent aussi équiper des écrans de toutes sortes, notamment des écrans d'ordinateur. Dans ce dernier cas, on a généralement un verre d'écran avec « côté utilisateur » un revêtement antireflet, et de l'autre côté un autre revêtement antireflet qui est également antistatique (par exemple en remplaçant tout une partie d'une couche à haut indice de l'empilement par une couche conductrice du type oxyde d'indium dopé à l'étain ITO). L'empilement peut ainsi commencer par 10 nm d'ITO : il peut donc y avoir de symétrie de structures entre les deux revêtements antireflets équipant un substrat, les deux pouvant suivre l'enseignement de l'invention ou seulement l'un des deux. Le revêtement antireflets de l'invention peut aussi avoir d'autres propriétés, notamment celle de filtrer les rayons ultraviolets, par exemple en incorporant de l'oxyde de cérium dans au moins une de ses couches.

## Revendications

1. Substrat transparent comportant sur au moins une de ses faces un revêtement antireflets fait d'un empilement de couches minces, d'indices de réfraction alternativement forts et faibles, à base de matériau diélectrique, ***caractérisé en ce qu'au*** moins une des couches minces à fort indice dudit revêtement antireflet comprend de l'oxyde de titane déposé par pulvérisation cathodique qui est modifié chimiquement par incorporation d'azote de façon à abaisser son indice de réfraction jusqu'à une valeur d'au plus 2,40, notamment jusqu'à une valeur d'au plus 2,38 et de préférence jusqu'à des valeurs comprises entre 2,25 et 2,38 à une longueur d'onde de 580 nm.

2. Substrat selon la revendication 1, ***caractérisé en ce que*** la couche mince comprenant de l'oxyde de titane fait partie d'un multi-couche à haut indice associant à celle-ci au moins une autre couche à indice élevé mais d'au plus 2,3, de façon à abaisser l'indice de réfraction « global » dudit multi-couche.

3. Substrat selon la revendication 2, **caractérisé en ce que** l'autre ou les autres couches à fort indice du multi-couche ont un indice compris entre 1,9 et 2,2, et notamment choisies à base d'oxyde(s) métallique(s) choisis parmi l'oxyde de tantale, de zirconium, d'étain, d'indium, de zinc ou à base de nitrure de silicium Si₃N₄ ou de nitrure d'aluminium AlN.

4. Substrat selon la revendication 2 ou la revendication 3, ***caractérisé en ce que*** le multi-couche comprend deux couches contiguës dont celle comprenant de l'oxyde de titane, ces deux couches présentant une différence d'indices de réfraction Δi négative en partant du substrat.

5. Substrat selon l'une des revendications 2 à 4, ***caractérisé en ce que*** le multi-couche comprend deux couches contiguës dont celle comprenant de l'oxyde de titane, ces deux couches comprenant une différence d'indice de réfraction, en valeurs absolues, comprise entre 0,1 et 0,6, notamment entre 0,4 et 0,5 et de préférence supérieure à 0,4.

6. Substrat selon l'une des revendications précédentes, ***caractérisé en ce que*** les couches à faible indice sont d'indice compris entre 1,30 et 1,65 et notamment choisies à base d'oxyde de silicium SiO₂, d'oxyde d'aluminium Al₂O₃, d'oxyfluorure d'aluminium AlOₓF_{y}, de fluorure d'aluminium AlF, de fluorure de magnésium MgF₂ ou de leurs mélanges, éventuellement halogénés, notamment à base d'un mélange SiO₂-Al₂O₃ pour la dernière couche du revêtement antireflets.

7. Substrat selon l'une des revendications précédentes, ***caractérisé en ce que*** le revêtement antireflets est sous forme d'un empilement (couche à fort indice/couche à faible indice)ₙ, avec n = 2 ou 3.

8. Substrat selon l'une des revendications précédentes, ***caractérisé en ce qu'***au moins une séquence (couche à fort indice/couche à faible indice) du revêtement antireflets, notamment la première à compter du substrat, est remplacée par une couche d'indice de réfraction intermédiaire, notamment d'indice compris entre 1,65 et 1,85.

9. Substrat selon la revendication 8, ***caractérisé en ce que*** la couche d'indice de réfraction intermédiaire est à base d'oxynitrure et/ou d'oxycarbure de silicium ou d'un mélange d'oxyde de silicium et d'oxyde d'étain, de zinc, de titane, de tantale.

10. Vitrage monolithique, feuilleté ou multiple à lame(s) de gaz intercalaire(s), ***caractérisé en ce qu'îl*** incorpore le substrat à revêtement antireflets selon l'une des revendications précédentes.

11. Vitrage selon la revendication 10, ***caractérisé en ce que*** sur le substrat (1) muni du revêtement antireflets (6) ou sur au moins un des autres substrats constitutifs dudit vitrage, est déposée une couche (ou un empilement de couches) à fonction anti-solaire, absorbant, anti-ultraviolet, anti-statique, bas-émissive, chauffante ou anti-salissures et/ou une couche organique hydrophobe à fonction anti-pluie ou hydrophile à fonction anti-buée, ou encore une couche d'argenture à fonction miroir.

12. Vitrage selon l'une des revendications 10 ou 11, ***caractérisé* en ce que** le substrat (1) muni du revêtement antireflets (6) ou au moins un des autres substrats constitutifs dudit vitrage est en verre extra-clair, ou en verre teinté dans la masse, éventuellement trempé ou armé, ou bombé ou plié, et éventuellement filtrant les ultraviolets.

13. Vitrage selon l'une des revendications 10 à 12, ***caractérisé en ce que*** le substrat muni du revêtement antireflets ou au moins un des autres substrats éventuels constitutifs dudit vitrage est en matériau polymère transparent, notamment en polyacrylate tel que le PMMA.

14. Application des substrats (1) à revêtement antireflets (6) selon l'une des revendications 1 à 10 ou des vitrages selon l'une des revendications 11 à 13 à la fabrication de vitrages intérieurs ou extérieurs de bâtiment, ou de verres de protection d'objets du type tableaux, de vitrages automobiles du type parebrise feuilleté, de miroirs, tout type d'écran de visualisation tels que des écrans anti-éblouissement pour ordinateurs, de verre décoratif, de vitrine, de mobilier verrier du type comptoir de magasin ou vitrine réfrigérée.

## Claims

1. Transparent substrate having, on at least one of its faces, an antireflection coating made of a multilayer stack comprising thin layers of alternately high and low refractive indices, and based on a dielectric material, ***characterized in that*** at least one of the thin layers having a high index of the said antireflection coating, comprises titanium oxide deposited by sputtering which is chemically modified by the incorporation of nitrogen so as to reduce its refractive index down to a value of at most 2.40, especially down to a value of at most 2.38 and preferably down to values of between 2.25 and 2.38 at a wavelength of 580 nm.

2. Substrate according to Claim 1, ***characterized in* that** the thin layer comprising titanium oxide forms part of a high-index multilayer by combining the titanium oxide layer with at least one other high-index layer, but one having an index of at most 2.3, so as to reduce the "overall" refractive index of the said multilayer.

3. Substrate according to Claim 2, ***characterized in that*** the other high-index layer or layers of the multilayer have an index of between 1.9 and 2.2 and are especially chosen to be based on metal oxide(s) chosen from tantalum, zirconium, tin, indium or zinc oxide or based on silicon nitride Si₃N₄ or on aluminium nitride AlN.

4. Substrate according to Claim 2 or Claim 3, ***characterized in that*** the multilayer comprises two contiguous layers one of which comprises titanium oxide, these two layers having a negative refractive index difference Δi when they are counted from the substrate.

5. Substrate according to Claims 2 to 4, ***characterized in that*** the multilayer comprises two contiguous layers one of which comprises titanium oxide, these two layers having a refractive index difference, in absolute values, of between 0.1 and 0.6, especially between 0.4 and 0.5 and preferably greater than 0.4.

6. Substrate according to one of the preceding claims, ***characterized in that*** the low-index layers have indices of between 1.30 and 1.65 and are especially chosen to be based on silicon oxide SiO₂, aluminium oxide Al₂O₃, aluminium oxyfluoride AlOₓF_{y}, aluminium fluoride AlF, magnesium fluoride MgF₂ or mixtures thereof, these possibly being halogenated, especially based on an SiO₂-Al₂O₃ mixture for the final layer in the antireflection coating.

7. Substrate according to one of the preceding claims, ***characterized in that*** the antireflection coating is in the form of a multilayer (high-index layer/low-index layer)ₙ stack with n = 2 or 3.

8. Substrate according to one of the preceding claims, ***characterized in that*** at least one sequence (high-index layer/low-index layer) of the antireflection coating, especially the first counting from the substrate, is replaced with a layer having an intermediate refractive index, especially an index of between 1.65 and 1.85.

9. Substrate according to Claim 8, ***characterized in that*** the layer having an intermediate refractive index is based on silicon oxynitride and/or oxycarbide or on a mixture of silicon oxide and tin, zinc, titanium or tantalum oxide.

10. Monolithic, laminated or multiple glazing, the latter having one or more gas-filled cavities, ***characterized in that*** it incorporates the substrate having an antireflection coating according to one of the preceding Claims.

11. Glazing according to Claim 10, ***characterized in that*** deposited on the substrate (1) provided with the antireflection coating (6) or on at least one of the other substrates making up the said glazing is a layer (or a multilayer stack) having a solar-protection, absorbing, UV-protection, antistatic, low-emissivity, heating or anti-fouling function and/or a hydrophobic organic layer having an anti-rain function or a hydrophilic organic layer having an anti-fogging function or else a silvering layer having a mirror function.

12. Glazing according to either of Claims 10 and 11, ***characterized in that*** the substrate (1) provided with the antireflection coating (6), or at least one of the other substrates making up the said glazing, is made of extra-clear glass or of solid-tinted glass, which may be toughened or reinforced, or curved or bent, and which may filter out ultraviolet radiation.

13. Glazing according to one of Claims 10 to 12, ***characterized in that*** the substrate provided with the antireflection coating, or at least one of the other possible substrates making up the said glazing, is a transparent polymer material, especially a polyacrylate such as PMMA.

14. Application of the substrates (1) having an antireflection coating (6) according to one of Claims 1 to 10 or of the glazing according to Claims 11 to 13 to the manufacture of internal or external glazing for buildings, or of glass for protecting objects of the painting type, of motor-vehicle windows of the laminated-windscreen type, of mirrors, of all types of display screen, such as anti-dazzling screens for computers, of decorative glass, of shop window or of glass furniture of the shop-counter or refrigerated-display-cabinet type.

## Patentansprüche

1. Transparentes Substrat, das auf wenigstens einer Seite eine Antireflexbeschichtung umfasst, die aus einem Aufbau aus dünnen Schichten mit abwechselnd hohem und niedrigem Brechungsindex auf der Basis eines dielektrischen Materials hergestellt ist, **dadurch gekennzeichnet, dass** mindestens eine der dünnen Schichten mit hohem Brechungsindex der Antireflexbeschichtung Titanoxid umfasst, das durch Kathodenzerstäubung aufgebracht und chemisch durch Einbau von Stickstoff derart modifiziert worden ist, dass sein Brechungsindex bis auf einen Wert von höchstens 2,40, insbesondere bis auf einen Wert von höchstens 2,38, und vorzugsweise bis auf einen Wert von 2,25 bis 2,38 bei einer Wellenlänge von 580 nm gesenkt worden ist.

2. Substrat nach Anspruch 1, **dadurch gekennzeichnet, dass** die das Titanoxid umfassende dünne Schicht Bestandteil einer Mehrfachschicht mit hohem Brechungsindex ist, mit welcher mindestens eine weitere Schicht mit hohem Brechungsindex, der aber höchstens 2,3 beträgt, derart verbunden ist, dass der "Gesamtbrechungsindex" der Mehrfachschicht gesenkt wird.

3. Substrat nach Anspruch 2, **dadurch gekennzeichnet, dass** die andere(n) Schicht(en) mit hohem Brechungsindex der Mehrfachschicht einen Brechungsindex von 1,9 bis 2,2 besitzt (besitzen) und insbesondere auf der Basis von Metalloxid(en) ausgewählt ist (sind), das (die) aus Tantal-, Zirconium-, Zinn-, Indium- und Zinkoxid ausgewählt ist (sind), oder auf der Basis von Siliciumnitrid, Si₃N₄, oder Aluminiumnitrid, AlN, ist (sind).

4. Substrat nach Anspruch 2 oder 3, **dadurch gekennzeichnet, dass** die Mehrfachschicht zwei aneinander angrenzende Schichten umfasst, darunter diejenige, welche das Titanoxid umfasst, wobei diese zwei Schichten eine negative Differenz der Brechungsindizes Δi aufweisen, wenn vom Substrat ausgegangen wird.

5. Substrat nach einem der Ansprüche 2 bis 4, **dadurch gekennzeichnet, dass** die Mehrfachschicht zwei aneinander angrenzende Schichten umfasst, darunter diejenige, welche das Titanoxid umfasst, wobei diese zwei Schichten eine Differenz der Brechungsindizes als Absolutwert umfassen, die 0,1 bis 0,6, insbesondere zwischen 0,4 und 0,5, und vorzugsweise mehr als 0,4 beträgt.

6. Substrat nach einem der vorhergehenden Ansprüche, **dadurch gekennzeichnet, dass** die Schichten mit niedrigem Brechungsindex einen Brechungsindex von 1,30 bis 1,65 besitzen und insbesondere auf der Basis von Siliciumoxid, SiO₂, Aluminiumoxid, Al₂O₃, Aluminiumfluoridoxid, AlOₓF_{y}, Aluminiumfluorid, AIF, Magnesiumfluorid, MgF₂, oder deren Gemischen, die gegebenenfalls halogeniert sind, insbesondere auf der Basis eines SiO₂-Al₂O₃₋Gemischs für die letzte Schicht der Antireflexbeschichtung, ausgewählt sind.

7. Substrat nach einem der vorhergehenden Ansprüche, **dadurch gekennzeichnet, dass** die Antireflexbeschichtung in Form eines Aufbaus (Schicht mit hohem Brechungsindex/Schicht mit niedrigem Brechungsindex)ₙ, mit n = 2 oder 3, vorliegt.

8. Substrat nach einem der vorhergehenden Ansprüche, **dadurch gekennzeichnet, dass** mindestens eine Reihenfolge (Schicht mit hohem Brechungsindex/Schicht mit niedrigem Brechungsindex) der Antireflexbeschichtung, insbesondere die erste ab dem Substrat, durch eine Schicht mit dazwischen liegendem Brechungsindex von insbesondere 1,65 bis 1,85 ersetzt ist.

9. Substrat nach Anspruch 8, **dadurch gekennzeichnet, dass** die Schicht mit Zwischen-Brechungsindex auf der Basis von Siliciumnitridoxid und/oder Siliciumcarbidoxid oder einem Gemisch aus Siliciumoxid und Zinn-, Zink-, Titan- und Tantaloxid ist.

10. Glas, das monolithisch, ein Verbundglas oder ein Mehrfachglas mit einer oder mehreren Gasfüllungen ist, **dadurch gekennzeichnet, dass** es das Substrat mit Antireflexbeschichtung nach einem der vorhergehenden Ansprüche umfasst.

11. Glas nach Anspruch 10, **dadurch gekennzeichnet, dass** auf dem mit der Antireflexbeschichtung (6) versehenen Substrat (1) oder auf mindestens einem der angrenzenden anderen Substrate des Glases eine Schicht (oder ein Schichtaufbau) mit vor Sonne schützender, absorbierender, vor Ultraviolettstrahlung schützender, antistatischer, niedrig emittierender, beheizender oder Schmutz abweisender Funktion und/oder eine hydrophobe organische Schicht mit einer Regen abweisenden oder hydrophilen Funktion mit Beschlag abweisender Wirkung oder auch eine Silberschicht mit Spiegelfunktion aufgebracht ist.

12. Glas nach Anspruch 10 oder 11, **dadurch gekennzeichnet, dass** das mit der Antireflexbeschichtung (6) versehene Substrat (1) oder mindestens eines der anderen das Glas bildenden Substrate aus Extraklarglas oder einem in der Masse gefärbten Glas besteht, das gegebenenfalls vorgespannt, bewehrt, gewölbt oder gebogen ist und gegebenenfalls die Ultraviolettstrahlung filtert.

13. Glas nach einem der Ansprüche 10 bis 12, **dadurch gekennzeichnet, dass** das mit der Antireflexbeschichtung versehene Substrat oder mindestens eines der anderen gegebenenfalls das Glas bildenden Substrate aus einem transparenten polymeren Material, insbesondere aus einem Polyacrylat wie PMMA, besteht.

14. Verwendung der Substrate (1) mit Antireflexbeschichtung (6) nach einem der Ansprüche 1 bis 10 oder der Gläser nach einem der Ansprüche 11 bis 13 zur Herstellung von Innen- oder Außenverglasungen für das Bauwesen, Schutzgläsern für Objekte wie Bilder, Autogläsern vom Typ Verbundfrontscheibe, Spiegeln, jedem beliebigen Typ eines Bildschirms wie entspiegelte Bildschirme für Computer, dekorativem Glas, Schaufenstern und Glasmöbeln vom Typ Ladentheke oder Kühlvitrine.
